# EUROPÄISCHE PATENTSCHRIFT

(11) **EP 0 527 261 B1**
(45) Veröffentlichungstag und Bekanntmachung des Hinweises auf die Patenterteilung: **18.01.1995**
(21) Anmeldenummer: 91114912.8
(22) Anmeldetag: 04.09.1991
(51) Int. Cl.: B60S 9/06

(54) **Motorbetriebene Unterbauhubstütze**
Frame lift support driven by motor
Support de levage entraîné par moteur

(30) Priorität: 12.08.1991 EP 91113503
(43) Veröffentlichungstag der Anmeldung: 17.02.1993
(73) Patentinhaber: Sellmaier, Willi, sen., D-89407 Dillingen (DE)
(72) Erfinder: Sellmaier, Willi, sen., D-89407 Dillingen (DE)

(56) Entgegenhaltungen:
- DE-A- 3 143 713
- US-A- 4 103 869
- US-A- 4 148 461
- US-A- 4 466 637

## Beschreibung

Die Erfindung bezieht sich auf eine Motorgetriebene Unterbauhubstütze gemäß dem Oberbegriff des Anspruchs 1. Eine solche Unterbauhubstütze ist zum Beispiel aus dem Dokument US-A-4 103 869 bekannt.

Es ist bekannt, daß Fahrzeuge mit Sonderaufbauten (z.B. insbesondere Wohnmobile sowie Anhänger, z.B. Wohnwagen) aufgrund ihres meist langen Hecküberhanges bzw. aufgrund ihrer Innenausstattung (z.B. Küche und Sanitärbereich im Heck) im Stand eine oft ungenügende Stabilität aufweisen.
Darüber hinaus ergeben sich Schwierigkeiten beim Abstellen auf unebenem Gelände durch die fehlende Möglichkeit eines Niveauausgleiches. Zur Beseitigung dieses Problems werden Stützen der unterschiedlichsten Art (statische und dynamische Systeme, hydraulische oder elektromechanische Stützen) verwendet.
Die dabei verwendeten mechanischen Systeme (z.B. Kurbelstützen) erfordern eine Bedienung vom Fahrzeugäußeren aus. Elektromechanische bzw. hydraulische Stützsysteme bedingen ein Durchbrechen des Fahrzeugunterbodens, was bei vielen Fahrzeugtypen nicht möglich ist bzw. - dort wo die Möglichkeit besteht - zum Problem der Kältebrückenbildung führt.

Der im vorliegenden Patentanspruch angegebenen Erfindung liegt das Problem zugrunde, für Fahrzeuge mit Sonderaufbau, insbesondere mit langem Überbau sowie für Fahrzeuganhänger aller Art (z.B. Wohnwagen), eine sichere Abstützung im Stand mit dem notwendigen Niveauausgleich zu gewährleisten.
Ein- und Ausfahren der Stützen soll dabei mittels eines Spindelmotors stufenlos erfolgen können, wobei der Motor - trotz Anbringung am Fahrzeugunterboden - vor Verschmutzung etc. sicher geschützt sein soll.

Erfindungsgemäß wird die gestellte Aufgabe dadurch gelöst, daß eine gattungs gemäße Unterbauhubstütze die Merkmale des Kennzeichnungsteils des Patentanspruchs 1 aufweist.

Mit der Erfindung werden insbesondere die folgenden Vorteile erzielt:
Die stufenlos ausfahrbare Scherenstütze (Gesamtgewicht pro Stütze 8 Kg) ermöglicht einen weitgehenden Niveauausgleich bei abgestellten Fahrzeugen bzw. Anhängern auf unebenen Gelände bei sicherem Stand (Abstützung und Niveauausgleich sind bis zu 1200 Kg pro Stütze möglich); der Spindelmotor mit Teleskopstange zum elektromechanischen Ein- und Ausfahren sitzt geschützt in einem C-Profil; der Spindelmotor ist kugelgelagert, wodurch im Vergleich zum Eigengewicht große Hubleistungen und auch anpassbare Übersetzungen ermöglicht werden; die gesamte Konstruktion (C-Profil mit Antrieb und Trägerkonstruktion) kann ohne Bodendurchbruch am Fahrzeugrahmen in Fahrtrichtung bzw. quer, an der Vorderseite wie am Heck des Fahrzeuges, angebracht werden. Hierdurch wird ein erforderlicher Bodendurchbruch zur sicheren Unterbringung des Antriebsmotors vermieden; die Bedienung der gesamten Konstruktion erfolgt vom Fahrzeuginneren aus; die bewegliche Fußplatte erlaubt eine sichere Anpassung der Konstruktion an das jeweilige Gelände; durch den Einbau von zwei Endschaltern wird sowohl die max. Ausfahrlänge der Konstruktion als auch das ordnungsgemäße Einfahren der Stütze beschränkt bzw. gesteuert - die Verwendung einer verschleißanfälligen Rutschkupplung ist dadurch überflüssig; der ein- wie auch ausgefahrene Zustand der Stütze kann dem Fahrer des Fahrzeuges im Inneren durch eine Kontrollschaltung angezeigt werden.

Ein Ausführungsbeispiel der Erfindung ist in der Zeichnung dargestellt.

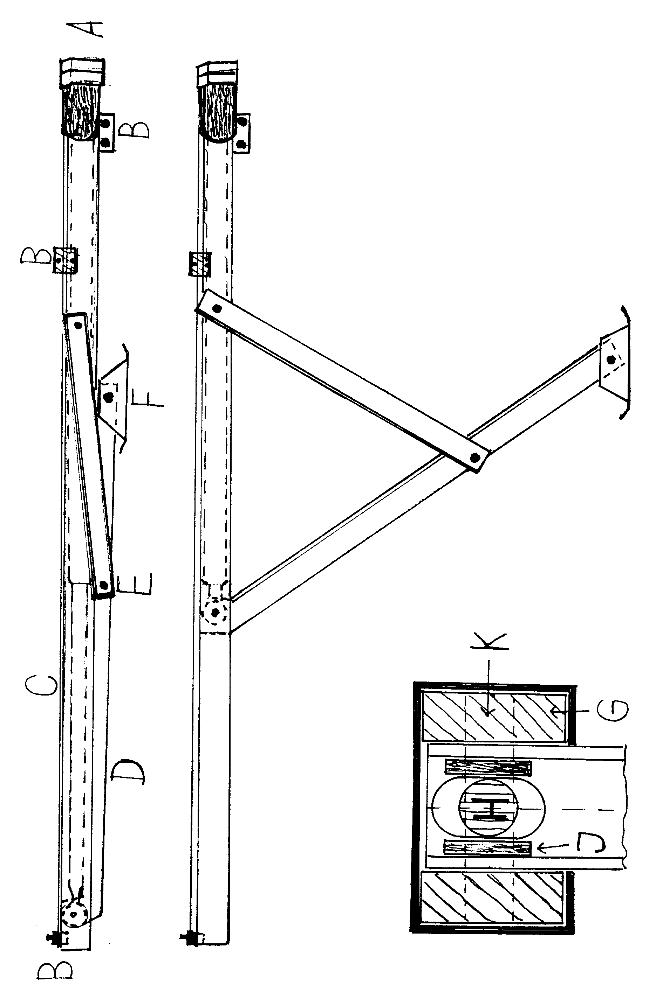

In Fig. 1 ist die Scherenstütze hochgeklappt, das Fahrzeug ist fahrbereit. In der darunterliegenden Fig. 2 wurde die Scherenstütze durch Bedienung des Spindelmotors und der Teleskopstange unter Zuhilfenahme des Trägerarmes ausgefahren und stützt nun über die bewegliche Fußplatte das im Stand befindliche Fahrzeug ab. Dabei ist ein stufenloses Ausfahren möglich.
Ein wesentlicher Vorteil der Konstruktion liegt in ihren flexiblen Anbringungsmöglichkeiten. Die Stützen können einzeln oder paarweise jeweils sowohl parallel in Fahrtrichtung an beiden Seiten des Fahrzeuges bzw. parallel zur hinteren oder vorderen Stoßstange in einfacher Ausführung angebracht werden.

## Patentansprüche

1. Motorgetriebene Unterbauhubstütze zur Abstützung und zum Niveauausgleich von Fahrzeugen ,insbesondere für Wohnmobile, Kfz mit Sonderaufbauten und Anhänger etc. , wobei die Entlastungsvorrichtung aus einem mit der Karosserie des Fahrzeuges festverbundenen und aus einem im Querschnitt C-förmigen Profil ausgebildeten Hauptrahmen (C) und aus einem variabel ausfahrbaren Scherenstützbügel (E,D) besteht, wobei ein Element (E) des Scherenstützbügels auf einem seiner Enden mit dem anderen Element (D) des Scherenstützbügels und innerhalb dessen Länge und auf dem anderen Ende mit dem Hauptrahmen (C) gelenkig verbunden ist und wobei das andere Element (D) des Scherenstützbügels als Trägerarm dient und mit einer beweglichen Fußplatte (F) versehen ist und mit dem in Längsrichtung liegenden Schrauben eines Spindelmotors (A) verbunden ist und wobei die Entlastungsvorrichtung sowohl einzeln als auch paarweise längs oder quer am Fahrzeug angebracht werden kann, **dadurch gekennzeichnet**,
- daß der Hauptrahmen (C) als C-Profil mit rechtwinklig nach innen abgekanteten Enden ausgebildet ist;
- daß der Spindelmotor (A) in diesem C-förmigen Hauptrahmenprofil geschützt untergebracht ist und mit einer Teleskopstange versehen ist
- und daß die Verbindung zwischen dem als Tragarm dienenden Scherenstützbügelelement (D) am Ende der Teleskopstange durch einem Querbolzen (K) erfolgt und mit Gleitrollen in den abgekanteten Enden des C-Profils des Hauptrahmens (C) geführt bzw. angefangen oder aufgetragen wird.

## Claims

1. Motorized support lift to support and level vehicles (particularly camping cars, special body cars, trailers, etc.); the support device consists of a main frame (C) with C-shaped cross-section that is permanently connected to the vehicle body, as well as of a variably extensible scissor-type support (E, D); one arm (E) of said scissor-type support is hinged at one of its ends to some point along the other arm and the other end is hinged to the main frame (C); the other arm (D) of the scissor-type support, that serves as support foot, provides a mobile base plate (F) and is connected to the lengthwise arranged spindles of a spindle motor (A); the support device can be installed at the vehicle individually or in pairs, lengthwise or crosswise,
**characterized in that**
- the main frame (C) is shaped as a C-section, the ends of which are edged inwards,
- the spindle motor (A) is installed in said C-shaped main frame in such a way that it is protected by it, and is equipped with a telescope rod
- and in that the connection between the scissor-type support (D) serving as support foot at the end of the telescope arm is made by a transversal pin (K) and guided and caught by slide rolls in the edged ends of the C-section of the main frame (C).

## Revendications

1. Support élévateur commandé par moteur pour le support et la mise à niveau de véhicules (notamment pour camping cars, véhicules avec carrosserie spéciale, remorques, etc.); le dispositif de support étant composé d'un cadre principal (C) dont la section est réalisée comme profil en C, solidaire de la carrosserie, ainsi que d'un appui articulé librement dépliable (E,D); une branche (E) de cet appui s'articulant, par une extrémité, sur l'autre branche (D) dudit appui, à un point situé sur la longueur de cette dernière, et, par l'autre extrémité, sur le cadre principal (C); l'autre branche (D) servant de pied d'appui sera munie d'une plaque de base mobile (F) et reliée aux vis d'un moteur à vis (A), logées en sens longitudinal; le dispositif de support pourra être fixé sur le véhicule, individuellement ou par paires, en sens longitudinal ou transversal,
**étant caractérisé en ce que**
- le cadre principale (C) est réalisé sous forme d'un profil en C, aux extrémités duquel les bords sont pliés en angle droit sur l'intérieur
- le moteur à vis (A) est installé et abrité dans ce cadre principal dont la section est réalisée comme profil en C et qu'il est équipé d'une tige téléscopique;
- et que la liaison entre la branche d'appui (D), qui sert de pied d'appui, est assurée, à l'extrémité de la tige téléscopique par un boulon transversal (K) et est guidée, maintenue ou arrêtée par des rouleaux logés dans les coins formés aux extrémités pliées du profil en C.
